# EUROPÄISCHE PATENTSCHRIFT

(11) **EP 2 912 233 B1**
(45) Veröffentlichungstag und Bekanntmachung des Hinweises auf die Patenterteilung: **19.09.2018**
(21) Anmeldenummer: 13810882.4
(22) Anmeldetag: 18.10.2013
(51) Int. Cl.: E03B 1/04, E03B 3/02

(54) **REGENWASSERWERK**
RAINWATER PLANT
COLLECTEUR D'EAU PLUVIALE

(30) Priorität: 25.10.2012 DE 102012020944
(43) Veröffentlichungstag der Anmeldung: 02.09.2015
(73) Patentinhaber: WISY AG Haustechniksysteme, Filtertechnik, 63699 Kefenrod (DE)
(72) Erfinder: DENK, Arnold, 63688 Gedern (DE); MAURER, Jan, 63699 Kefenrod (DE)
(74) Vertreter: Hebing, Norbert
(86) Internationale Anmeldenummer: PCT/DE2013/000613
(87) Internationale Veröffentlichungsnummer: WO 2014/063674

(56) Entgegenhaltungen:
- EP-A2- 1 138 836
- AU-A1- 2006 202 589
- DE-A1- 4 019 142
- DE-A1- 19 515 366
- DE-U1- 29 603 420

## Beschreibung

Die Erfindung bezieht sich auf ein Regenwasserwerk mit mindestens einer Wasserentnahmestelle, mit einer Zisterne, einem Trinkwassernetzanschluss, einer Saugpumpe, deren Saugseite über eine Saugleitung mit der Zisterne und über eine Anschlussleitung mit dem Trinkwassernetzanschluss verbunden ist, wobei in der Anschlussleitung ein elektromagnetisch betätigbares Trennventil und in der Saugleitung ein Sperrventil angeordnet ist, mit einem Schwimmerschalter in der Zisterne, wobei der Schwimmerschalter in Reihe mit der elektromagnetischen Betätigung des Trennventils geschaltet ist, und mit einem Anforderungsschalter, der im Falle der Entnahme von Wasser an der Wasserentnahmestelle betätigt wird und in Reihe mit dem Schwimmerschalter und der elektromagnetischen Betätigung des Trennventils geschaltet ist.

Ein derartiges Regenwasserwerk ist in der DE 40 19 142 A1 beschrieben. Sowohl in der Saugleitung als auch in der Anschlussleitung befindet sich je ein elektromagnetisch betätigbares Trennventil, deren Betätigung über einen Stromkreis erfolgt, in dem sich der Hauptschalter des Regenwasserwerks befindet. In diesem Stromkreis befindet sich auch der Schwimmerschalter der Zisterne, der öffnet, wenn die Zisterne eine minimale Befüllung erreicht hat. Da die Betätigungen damit stromlos werden, wird das Trennventil in der Saugleitung geschlossen und das Trennventil in der Anschlussleitung geöffnet, sobald der Pegel in der Zisterne unter einen Minimalwert fällt. Die Verwendung von zwei Ventilen macht das Regenwasserwerk erstens teuer und zweitens auch störanfälliger, da die Wahrscheinlichkeit, dass eines der Ventile ausfällt, relativ groß ist.

Die AU 2006 202 589 A1 offenbart ein Regenwasserwerk, bei dem an die Druckseite einer Tauchpumpe in der Zisterne eine Anschlussleitung zu einem Trinkwassernetzanschluss anschließt.

Dieser Anschluss wird von einem elektromagnetisch betätigbaren Ventil kontrolliert, das im stromlosen Zustand offen ist.

Die EP 1 138 836 A2 offenbart ein Regenwasserwerk mit einer Druckerhöhungspumpe, deren Saugseite sowohl an eine Zisterne als auch an einen Trinkwasserspeicher angeschlossen ist. In der Zisterne befindet sich eine Tauchpumpe. In der Saugleitung zur Zisterne sowie in der Anschlussleitung zum Trinkwasserbehälter befindet sich jeweils ein Rückschlagventil, das in Richtung auf die Saugseite der Pumpe öffnet.

Die DE 195 15 366 offenbart ein Regenwasserwerk, bei dem die Zisterne bei einem niedrigen Wasserstand über einen Trinkwassernetzanschluss wieder mit Wasser befüllt wird.

Die DE 296 03 420 U1 offenbart ein Regenwasserwerk mit einer Tauchpumpe. Diese besitzt auch einen Anschluss zu einem Trinkwasserspeicher, wobei die Verbindung durch ein Ventil kontrolliert wird. Dieses wird über eine Steuereinrichtung geöffnet, wenn der Spiegel in der Zisterne unter einen gewissen wert fällt.

Die Erfindung beruht somit auf der Aufgabe, ein weniger störanfälliges Wasserwerk zu schaffen.

Zur Lösung des Problems sieht die Erfindung vor, dass es sich bei dem Sperrventil um ein zur Zisterne hin sperrendes Rückschlagventil handelt und dass das elektromagnetisch betätigbare Trennventil ein stromlos geschlossenes Ventil ist und der Schwimmerschalter so ausgebildet ist, dass er schließt, wenn der Pegel der Zisterne unter einen Minimalwert fällt.

Auf diese Weise wird erreicht, dass lediglich das Trennventil geschaltet werden muss. Ein Rückfluss des Trinkwassers vom Trinkwassernetzanschluss in die zisterne wird durch das Rückschlagventil verhindert, das rein mechanisch arbeitet.

Im Gegensatz zum oben zitierten Stand der Technik ist der Schwimmerschalter so eingerichtet, dass er öffnet, wenn der Mindestpegel in der Zisterne unterschritten wird. Bei gefüllter Zisterne ist er somit geschlossen, so dass die Trennventile mit jeder Wasseranforderung geschaltet werden.

Das Trennventil wird somit nur dann geschaltet, wenn erstens Wasser angefordert wird und zweitens die Zisterne leer ist. Dieses minimiert die Anzahl der Schaltwechsel des Trennventils auf ein Minimum, so dass mit Ausfällen des Ventils nicht zu rechnen ist.

Vorzugsweise ist daher vorgesehen, dass ein Schaltautomat für die Saugpumpe vorgesehen ist, der die Saugpumpe bei einer Wasserentnahme an der Wasserentnahmestelle einschaltet, wobei der Schaltautomat mit dem Anforderungsschalter gekoppelt ist.

Dadurch wird erreicht, dass die Magnetbetätigung der Ventile nicht durch die Stromspitzen, die beim Anlaufen des Motors entstehen, zu sehr belastet wird.

Vorzugsweise ist der Schaltautomat so eingerichtet, dass er den Anforderungsschalter schließt, wenn ein Unterdruck in einer Versorgungsleitung zwischen der Saugpumpe und der Wasserentnahmestelle vorliegt. Die Saugpumpe wird dadurch selbsttätig in Betrieb genommen, wenn am Ende der Versorgungsleitung, z. B. durch Öffnen eines Wasserhahns, Wasser entnommen wird.

Damit die Saugpumpe in Betrieb bleibt, solange Wasser entnommen wird, ist ein Strömungssensor in oder an der Versorgungsleitung, wobei der Strömungssensor derart mit dem Anforderungsschalter gekoppelt ist, dass dessen geschlossener Zustand aufrechterhalten bleibt, solange eine Strömung in der Versorgungsleitung detektiert wird.

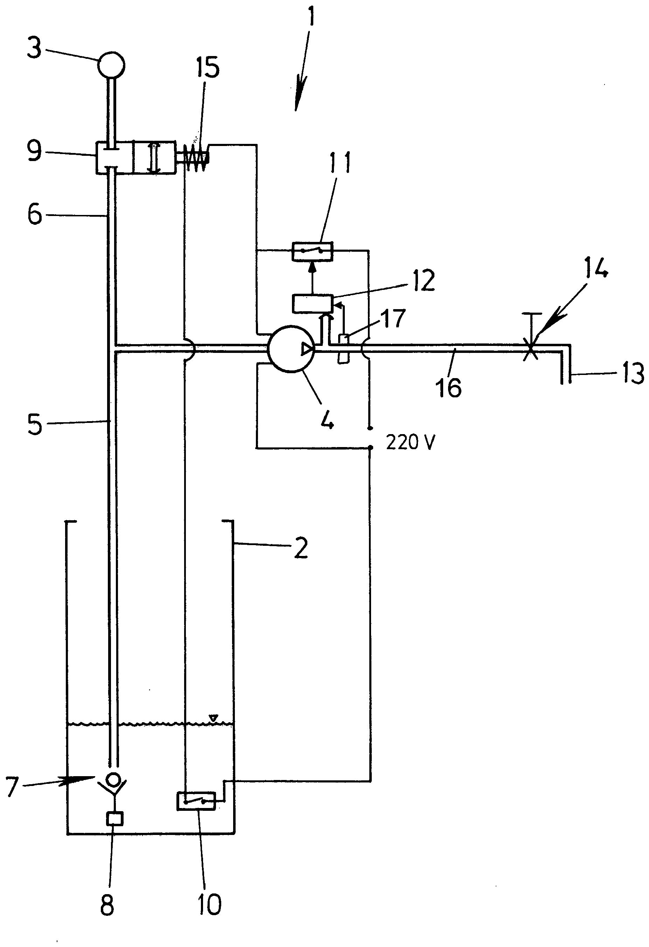

Im Folgenden soll anhand eines Ausführungsbeispiels die Erfindung näher erläutert werden, das in der einzigen Figur in Form eines Schaltplanes dargestellt ist.

Der Schaltplan zeigt ein Regenwasserwerk 1 mit einer Zisterne 2 und einem Trinkwassernetzanschluss 3. Des Weiteren ist eine Saugpumpe 4 vorgesehen, die außerhalb der Zisterne angeordnet ist und die über eine Saugleitung 5, die zum Boden der Zisterne führt, mit dieser verbunden ist. Des Weiteren ist eine Anschlussleitung 6 zum Trinkwassernetzanschluss 3 vorgesehen. Innerhalb der Saugleitung 5 befindet sich ein Rückschlagventil 7, das zur Zisterne hin sperrt. Dieses Ventil kann am Ende der Saugleitung 5 ebenso wie ein Filter 8 vorgesehen werden. Das Rückschlagventil 7 kann sich aber auch an beliebiger Stelle in der Saugleitung zwischen ihrem Ende in der Zisterne 2 und der Abzweigung zur Anschlussleitung 6 befinden.

In der Anschlussleitung 6 befindet sich ein elektromagnetisch betätigbares Trennventil 9 in Form eines 2/2-Wegeventils, das im stromlosen Zustand die Anschlussleitung 6 sperrt. Erst bei Strombeaufschlagung des Elektromagneten zur Betätigung des Trennventils 9 wird es geöffnet.

Innerhalb der Zisterne befindet sich ein Schwimmerschalter 10, der offen ist, so lange die Zisterne - wie dargestellt - zumindest zum Teil gefüllt ist. Wird ein Mindestpegel erreicht oder unterschritten, schließt dieser Schalter 10. Des Weiteren ist ein Anforderungsschalter 11 vorgesehen, der mit einem so genannten Schaltautomaten 12 gekoppelt ist. Ein solcher Schaltautomat 12 ist zum Einschalten der Saugpumpe 4 vorgesehen. Dieser Schalter reagiert auf einen Unterdruck in der Versorgungsleitung 16 zur Wasserentnahmestelle 13. Wird dort ein vorhandener Wasserhahn 14 geöffnet, entsteht ein Unterdruck, der den Schaltautomaten 12 veranlasst, die Saugpumpe einzuschalten, indem der Anforderungsschalter 11 geschlossen wird. Dieser Zustand wird so lange aufrechterhalten, wie mittels eines Strömungssensors 17 festgestellt wird, dass durch die Versorgungsleitung 16 Wasser zur Wasserentnahmestelle 13 läuft. Der Schaltautomat 12 hält dann den Anforderungsschalter 11 geschlossen. Dazu ist der Anforderungsschalter 11 mit dem Schaltautomaten 12 mechanisch gekoppelt. Der Anforderungsschalter 11 kann auch - wie in dem in der Figur dargestellten Schaltkreis gezeigt - zum Ein- und Ausschalten der Pumpe 4 genutzt werden, die je nach Schaltzustand des Trennventils 9 Wasser aus der Zisterne 2 oder vom Trinkwassernetzanschluss in die Versorgungsleitung 16 pumpt.

Der Anforderungsschalter 11, der Schwimmerschalter 10, sowie der Elektromagnet 15 des Trennventils 9 sind in Reihe zu einer Spannungsquelle geschaltet. Der Elektromagnet 15 wird daher nur dann mit Strom beaufschlagt, so dass das Trennventil öffnet, wenn sowohl der Schwimmerschalter (Zisterne leer) und der Anforderungsschalter - (Wasser wird an der Wasserentnahmestelle 13 angefordert) geschlossen sind. Somit wird bei einer leeren Zisterne Wasser vom Trinkwassernetzanschluss 3 zur Wasserentnahmestelle 13 gepumpt. Das Rückschlagventil 7 verhindert, dass dabei das Trinkwasser in die Zisterne 2 gelangt.

Der Elektromagnet 15 wird auf Grund der gewählten Schaltung nur selten betätigt, nämlich nur dann, wenn die Zisterne leer ist und Wasser an der Wasserentnahmestelle 13 angefordert wird.

Üblicherweise besteht nicht - wie gezeigt - eine geschlossene Verbindung zum Trinkwassernetzanschluss, sondern es wird ein Zwischenspeicher vorgesehen, wie er z. B. auch in der oben zitierten DE 40 19 142 A1 beschrieben ist.

### Bezugszeichenliste

- 1: Regenwasserwerk
- 2: Zisterne
- 3: Trinkwassernetzanschluss
- 4: Saugpumpe
- 5: Saugleitung

- 6: Anschlussleitung
- 7: Rückschlagventil
- 8: Filter
- 9: Trennventil
- 10: Schwimmerschalter

- 11: Anforderungsschalter
- 12: Schaltautomat
- 13: Wasserentnahmestelle
- 14: Wasserhahn
- 15: Elektromagnet
- 16: Versorgungsleitung
- 17: Strömungssensor

## Patentansprüche

1. Regenwasserwerk mit mindestens einer Wasserentnahmestelle (13), mit einer Zisterne, einem Trinkwassernetzanschluss (3), einer Saugpumpe (4), deren Saugseite über eine Saugleitung (5) mit der Zisterne (2) und über eine Anschlussleitung (6) mit dem Trinkwassernetzanschluss (3) verbunden ist, wobei in der Anschlussleitung (6) ein elektromagnetisch betätigbares Trennventil (9) und in der Saugleitung (5) ein Sperrventil angeordnet ist, mit einem Schwimmerschalter (10) in der Zisterne (2), wobei der Schwimmerschalter (10) in Reihe mit der elektromagnetischen Betätigung des Trennventils (9) geschaltet ist und mit einem Anforderungsschalter (11), der im Falle der Entnahme von Wasser an der Wasserentnahmestelle betätigt wird, und in Reihe mit dem Schwimmerschalter (10) und der elektromagnetischen Betätigung des Trennventils (9) geschaltet ist, **dadurch gekennzeichnet, dass** es sich bei dem Sperrventil um ein zur Zisterne hin sperrendes Rückschlagventil (7) handelt, wobei das elektromagnetisch betätigbare Trennventil (9) ein stromlos geschlossenes Ventil ist und der Schwimmerschalter (10) so ausgebildet ist, dass er schließt, wenn der Pegel der Zisterne (2) unter einen Minimalwert fällt.

2. Regenwasserwerk nach Anspruch 1, **dadurch gekennzeichnet, dass** ein Schaltautomat (12) für die Saugpumpe (4) vorgesehen ist, der die Saugpumpe (4) bei einer Wasserentnahme an der Wasserentnahmestelle (13) einschaltet, wobei der Schaltautomat (12) mit dem Anforderungsschalter (11) gekoppelt ist.

3. Regenwasserwerk nach Anspruch 2, **dadurch gekennzeichnet, dass** der Schaltautomat (12) so eingerichtet ist, dass er den Anforderungsschalter (11) schließt, wenn ein Unterdruck in einer Versorgungsleitung zwischen der Saugpumpe (4) und der Wasserentnahmestelle (13) vorliegt.

4. Regenwasserwerk nach Anspruch 3, **dadurch gekennzeichnet, dass** ein Strömungssensor (17) in oder an der Versorgungsleitung (16) vorgesehen ist, und dass der Strömungssensor (17) derart mit dem Anforderungsschalter (11) gekoppelt ist, dass dessen geschlossener Zustand aufrechterhalten bleibt, solange eine Strömung in der Versorgungsleitung (16) detektiert wird.

## Claims

1. A rainwater harvesting system, having at least one water removal point (13), with a cistern, a drinking water network connection (3), a suction pump (4), the suction side of which is connected via a suction pipeline (5) to the cistern and (2) and via a connection pipeline (6) to the drinking water network connection (3), wherein an electromagnetically operated isolation valve (9) is arranged in the connection pipeline (6) and a shut-off valve is arranged in the suction pipeline (5), with a floating switch (10) in the cistern (2), wherein the floating switch (10) is connected in series with the electromagnetic operation of the isolation valve (9) and with a request switch (11), which is operated in the event that water is removed at the water removal point and is connected in series with the floating switch (10) and the electromagnetic operation of the isolation valve (9), **characterised in that** the shut-off valve is a non-return valve (7) that blocks in the direction of the cistern, wherein the electromagnetically operated isolation valve (9) is a currentless closed valve and the floating valve (10) is designed such that it closes when the level in the cistern (2) falls below a minimum value.

2. The rainwater harvesting system according to claim 1, **characterised in that** a switching unit (12) is provided for the suction pump (4) which switches the suction pump (4) on when water is removed at the water removal point (13), wherein the switching unit (12) is connected to the request switch (11).

3. The rainwater harvesting system according to claim 2, **characterised in that** the switching unit (12) is set up such that it closes the request switch (11) if there is a negative pressure in a supply pipeline between the suction pump (4) and the water removal point (13).

4. The rainwater harvesting system according to claim 3, **characterised in that** a flow sensor (17) is provided in or on the supply pipeline (16) and **in that** the flow sensor (17) is connected to the request switch (11) in such a way that the latter remains in the closed state as long as a flow is detected in the supply pipeline (16).

## Revendications

1. Collecteur d'eau pluviale, comportant au moins un point de soutirage d'eau (13), doté d'une citerne, d'un branchement d'eau potable (3), d'une pompe aspirante (4), dont le côté aspiration est relié par l'intermédiaire d'un conduit d'aspiration (5) avec la citerne (2) et par l'intermédiaire d'un conduit de raccordement (6) avec le branchement d'eau potable (3), dans le conduit de raccordement (6) étant placée une soupape de sectionnement (9) à actionnement électromagnétique et dans le conduit d'aspiration (5) étant placée une soupape d'arrêt, avec un interrupteur à flotteur (10) dans la citerne (2), l'interrupteur à flotteur (10) étant monté en série avec l'actionnement électromagnétique de la soupape de sectionnement (9) et doté d'un interrupteur de requête (11), qui est actionné dans le cas de soutirage d'eau au point de soutirage d'eau et qui est monté en série avec l'interrupteur à flotteur (10) et avec l'actionnement électromagnétique de la soupape de sectionnement (9), **caractérisé en ce que** la soupape d'arrêt est un clapet anti-retour (7) fermant en direction de la citerne, la soupape de sectionnement (9) à actionnement électromagnétique étant une soupape fermée sans courant et l'interrupteur à flotteur (10) étant conçu de sorte à fermer lorsque le niveau dans la citerne (2) tombe sous une valeur minimale.

2. Collecteur d'eau pluviale selon la revendication 1, **caractérisé en ce qu'**un inverseur (12) qui met en route la pompe aspirante (4) lors d'un soutirage d'eau au point de soutirage d'eau (13) est prévu pour la pompe aspirante (4), l'inverseur (12) étant connecté sur l'interrupteur de requête (11).

3. Collecteur d'eau pluviale selon la revendication 2, **caractérisé en ce que** l'inverseur (12) est aménagé de sorte à fermer l'interrupteur de requête (11) en présence d'une dépression dans un conduit d'alimentation entre la pompe aspirante (4) et le point de soutirage d'eau (13).

4. Collecteur d'eau pluviale selon la revendication 3, **caractérisé en ce qu'**un capteur de débit (17) est prévu dans ou sur le conduit d'alimentation (16) et **en ce que** le capteur de débit (17) est connecté sur l'interrupteur de requête (11) de sorte que la position fermée de celui-ci reste maintenue aussi longtemps qu'un débit est détecté dans le conduit d'alimentation (16).
